# EUROPÄISCHE PATENTANMELDUNG

(11) **EP 4 632 428 A1**
(43) Veröffentlichungstag der Anmeldung: **15.10.2025**
(21) Anmeldenummer: 24169540.2
(22) Anmeldetag: 10.04.2024
(51) Int. Cl.: G01S 7/481, B08B 5/02, B60S 1/54, G01S 17/931, G01S 7/497

(54) **REINIGUNGSVORRICHTUNG FÜR EINE SENSORVORRICHTUNG UND SENSORVORRICHTUNG MIT EINER REINIGUNGSVORRICHTUNG**

(71) Anmelder: Olaf und Andre Tünkers GBR, 40880 Ratingen (DE)
(72) Erfinder: TÜNKERS, André, 40880 Ratingen (DE); EPPERS, Rolf, 40880 Ratingen (DE); DREYER, Christian, 40880 Ratingen (DE)
(74) Vertreter: Feucker, Max Martin

(57) **Zusammenfassung**

Die Erfindung betrifft eine Reinigungsvorrichtung (2) für eine Sensorvorrichtung (1), umfassend ein Gehäuse (3) mit einem Strömungskanal (4), mindestens eine strömungstechnisch mit dem Strömungskanal (4) verbundene Austrittsöffnung (5.1, 5.2) und einen strömungstechnisch mit dem Strömungskanal (4) verbundenen Ventilator (6).

## Beschreibung

Die Erfindung betrifft eine Reinigungsvorrichtung für eine Sensorvorrichtung sowie eine Sensorvorrichtung mit einer Reinigungsvorrichtung. Die Sensorvorrichtung umfasst ein Gehäuse sowie einen beispielsweise als Laserscanner, 3D-Kamera oder Kamera ausgebildeten Sensor. Damit elektromagnetische Strahlung von oder zu dem Sensor gelangen kann, umfasst die Sensorvorrichtung eine Scheibe, durch die die elektromagnetische Strahlung hindurchtreten kann. Die den Sensor verdeckende und damit vor Umwelteinflüssen schützende Scheibe kann plan oder gekrümmt ausgebildet sein, wobei die Scheibe auch kuppenartig mit einer Krümmung und rotationssymmetrisch ausgebildet sein kann. Insbesondere wenn ein Laserscanner als Sensor ausgebildet ist, kann der Laserscanner von einer halbkugelförmigen Scheibe geschützt sein.

Die Erfindung betrifft insbesondere auch fahrerlose Fahrzeuge, an denen mindestens eine Sensorvorrichtung angeordnet ist. Die Erfindung betrifft insbesondere im Karosseriebau der Kfz-Industrie eingesetzte fahrerlose Fahrzeuge. Das fahrerlose Fahrzeug weist insbesondere eine elektrisch aufladbare Batterie auf und ist motorisch angetrieben, wobei es bevorzugt zum selbständig gesteuerten und/oder manuellen Auf- und Abladen sowie Fördern von Lasten eingerichtet ist. Das Fahrzeug ist insbesondere dazu eingerichtet, in Fertigungsstätten, wie insbesondere im Karosseriebau der Kfz-Industrie, eingesetzt zu werden, wozu die Lasten an (manuell oder über Telekommunikation vorgegebenen) anzusteuernden Positionen auf- und abgeladen werden und zwischen den Positionen mittels des Fahrzeuges befördert werden. Ein solches Fahrzeug kann beispielsweise einen Teleskop-Ketten-Förderer umfassen, welcher in um 180° zueinander versetzten Richtungen aus den seitlichen Umgrenzungslinien des Fahrzeuges ein- und ausfahrbar ist und die aufzunehmende oder abzugebende Last auf ein- oder beidseitig des Teleskop-Ketten-Förderers angeordneten Rollenbahnen auflädt oder an einen Lagerplatz ablädt.

Das Fahrzeug kann ferner ein Chassis umfassen, das an seiner Unterseite an entgegengesetzten Enden Elektromotoren und elektrisch angetriebene Rollen aufweist, die jeweils um eine vertikale Achse in beiden Richtungen um 360° drehbar und elektromotorisch antreibbar sind und zum gesteuerten Fahrbetrieb des Fahrzeuges dienen.

Solche insbesondere im Karosseriebau der Kfz-Industrie eingesetzten Fahrzeuge weisen insbesondere als Laserscanner oder als 3D-Kameras ausgebildete Sensoren auf, mit denen die in der Umgebung des Fahrzeuges befindlichen Objekte erfasst werden, wobei aufgrund der erfassten Daten eine Steuerung des Fahrzeuges erfolgt. Für eine exakte Positionierung und Steuerung des Fahrzeuges durch die Fertigungsstätte ist es erforderlich, dass der Laserscanner in einer exakt definierten Weise zum Fahrzeug ausgerichtet ist und die vom Sensor empfangene und/oder abgesandte Strahlung nicht von Verschmutzungen auf der den Sensor schützenden Scheibe beeinflusst wird. So können sich beispielsweise (Schmutz-)Partikel oder Wassertropfen auf einer Scheiben absetzen, durch welche die Transmission der elektromagnetischen Strahlung durch die Scheibe negativ beeinflusst wird. Es ist aber erforderlich, dass die Sensorvorrichtung trotz widriger Umgebungsbedingungen zuverlässig funktioniert.

DE 10 2021 134 206 A1 schlägt daher eine Reinigungsvorrichtung für eine Sensorvorrichtung vor, die eine Vielzahl von Düsen aufweist, wobei aus mehreren Düsen bestehende Gruppen von Düsen so ausgerichtet sind, dass durch die Auftreffpunkte des durch die Düsen hindurchtretenden Reinigungsmittels Reinigungslinien ausgebildet werden, die zueinander beabstandet sind. Als Reinigungsmittel kann Druckluft eingesetzt werden, welche mittels zugehöriger Leitungen zu der jeweiligen Düse geführt wird. Die Verwendung von Druckluft als Reinigungsmittel macht es erforderlich, dass an einem fahrerlosen Fahrzeug, an dem die Sensorvorrichtung zum Einsatz kommt, auch eine Quelle für Druckluft vorgesehen sein muss. So ist ein Pneumatiktank erforderlich, welcher durch einen ebenfalls am fahrerlosen Fahrzeug montierten Kompressor regelmäßig nachgefüllt werden muss. Es ist somit ein hoher apparativer und mit hohen Kosten verbundener Aufwand erforderlich, um die Reinigungsvorrichtung aus der DE 10 2021 134 206 A1 zu installieren und zu betreiben.

Aufgabe der vorliegenden Erfindung ist es daher, die mit Bezug zum Stand der Technik geschilderten Nachteile zumindest teilweise zu beseitigen und insbesondere eine Reinigungsvorrichtung für eine Sensorvorrichtung anzugeben, die mit geringerem apparativem Aufwand installiert werden und/oder kostengünstiger betrieben werden kann.

Eine mögliche Lösung für die Aufgabe ist mit der Reinigungsvorrichtung mit den Merkmalen des unabhängigen Anspruchs 1 angegeben, wobei weitere Lösungen und vorteilhafte Weiterbildungen in den Unteransprüchen sowie in der vorstehenden und nachfolgenden Beschreibung angegeben sind. Einzelne Merkmale der vorteilhaften Weiterbildungen können in technisch sinnvoller Weise miteinander kombiniert werden.

Gelöst wird die Aufgabe insbesondere durch eine Reinigungsvorrichtung für eine Sensorvorrichtung, die ein Gehäuse mit einem Strömungskanal, mindestens eine strömungstechnisch mit dem Strömungskanal verbundene und in dem Gehäuse angeordnete Austrittsöffnung und einen strömungstechnisch mit dem Strömungskanal verbundenen Ventilator umfasst.

Mit anderen Worten: Die Erfindung schlägt in ihrem Grundgedanken vor, dass keine mit den jeweiligen Düsen verbundene Druckluftquelle vorgesehen sein muss, sondern dass ein hohe Strömungsgeschwindigkeiten erzeugender Ventilator direkt Luft in den Strömungskanal fördert, die durch die Austrittsöffnungen aus dem Strömungskanal austritt und auf die zu reinigende Scheibe der Sensorvorrichtung geleitet wird, sodass die Scheibe durch den Luftstrom gereinigt wird. Hierbei weisen die Austrittsöffnungen im Vergleich zu mit einer Druckquelle verbundenen Düsen vergleichsweise große Querschnittsöffnungen auf, sodass durch den Ventilator beschleunigten Luft mit einem hohen Volumenstrom durch die mindestens eine Austrittsöffnung hindurchtreten kann. Die Verwendung eines Ventilators anstatt eines Druckluft-/Pneumatikspeichers mit einen den Pneumatikspeicher befüllenden Kompressor ist mit einem wesentlich geringeren apparativen Aufwand zum Einrichten und Betreiben der Reinigungsvorrichtung verbunden. Es werden somit weniger und insbesondere auch weniger komplexe Bauteile bei geringerem Kostenaufwand benötigt. Somit wird erheblich weniger Bauraum benötigt und ein Gewichtsvorteil erzielt. Da die vom Ventilator beschleunigte Luft direkt zum Reinigen der Sensorvorrichtung verwendet werden kann und somit keine Komprimierung der Luft erforderlich ist, ergibt sich auch ein geringerer Energieverbrauch. Da zur Reinigung nur der Ventilator angesteuert werden muss und nicht noch das Nachfüllen des Druckluftspeichers gesteuert/geregelt werden muss, ist der Aufwand für die Steuerung/Regelung der Reinigungsvorrichtung im Vergleich zu der aus dem Stand der Technik bekannten Reinigungsvorrichtung erheblich reduziert. Zudem ist eine solche Reinigungsvorrichtung jederzeit betreibbar, da nicht auf die Wiederauffüllung des Druckluftspeichers gewartet werden muss. Hinzukommt, dass eine solche, einen Ventilator umfassende Reinigungsvorrichtung einfach an bestehenden Sensorvorrichtungen nachrüstbar ist, da keine Installation eines Kompressors und eines Druckluftspeichers erforderlich ist.

Der Ventilator ist insbesondere dazu eingerichtet, Strömungsgeschwindigkeiten von Luft mit einer Geschwindigkeit zwischen 5 m/s und 50 m/s, bevorzugt zwischen 10m/s und 30m/s zu erzeugen.

Der Ventilator ist insbesondere dazu eingerichtet, mit einer Drehzahl zwischen 10.000 Umdrehungen pro Minute und 200.000 Umdrehungen pro Minute, bevorzugt zwischen 50.000 Umdrehungen pro Minute und 150.000 Umdrehungen pro Minute, besonders bevorzugt zwischen 80.000 Umdrehungen pro Minute und 120.000 Umdrehungen pro Minute betrieben zu werden. Mit solchen Ventilatoren können die für den Betrieb der Reinigungsvorrichtung vorteilhafte hohe Strömungsgeschwindigkeit und der die für den Betrieb der Reinigungsvorrichtung vorteilhafte hohe Volumenstrom der Luft erzeugt werden.

Prinzipiell ist es möglich, dass der Ventilator außerhalb des Gehäuses angeordnet ist und mittels genau einer strömungstechnischen Leitung mit dem Strömungskanal verbunden ist, so das vom Ventilator beschleunigte Luft durch den Strömungskanal strömen kann.

Es ist jedoch bevorzugt, dass der Ventilator in dem Gehäuse der Reinigungsvorrichtung angeordnet ist. Die Reinigungsvorrichtung wird somit als vormontierte Baugruppe bereitgestellt und ist besonders einfach an bestehenden Sensorvorrichtungen nachrüstbar. Es müssen somit nur die elektrischen Anschlussleitungen für den Ventilator aus dem Gehäuse herausgeführt werden. Durch die Anordnung des Ventilators in dem Gehäuse ist zudem eine vorgegebene Ausrichtung zu dem Strömungskanal gegeben. Zudem kann der Einlass des Strömungskanals unmittelbar stromab des Ventilators ausgebildet sein.

Stromauf des Ventilators kann ein Filter angeordnet sein, mit welchem Verschmutzungen in der Luft und Wasser abgeschieden werden können. Insbesondere ist der Filter ein Filter der Klasse IP 54. der Filter kann ebenfalls unmittelbar in oder an dem Gehäuse befestigt sein.

Bevorzugt wird der Strömungskanal unmittelbar durch die innere Gestalt des Gehäuses vorgegeben. Wenn der Ventilator in dem Gehäuse montiert ist, so wird die von dem Ventilator beschleunigte Luft unmittelbar in den bevorzugt unmittelbar durch das Gehäuse ausgebildeten Strömungskanal beschleunigt.

Der Strömungskanal ist also insbesondere der von dem Gehäuse begrenzte Bereich, der stromab des Ventilators und stromauf der mindestens einen Austrittsöffnung ausgebildet ist.

Prinzipiell kann die mindestens eine Austrittsöffnung jeweils mittels eines in das Gehäuse eingesetzten Einsatzes ausgebildet werden. Bevorzugt ist jedoch, dass die mindestens eine Austrittsöffnung jeweils unmittelbar als Aussparung in dem Gehäuse ausgebildet ist. Somit ist die mindestens eine Austrittsöffnung einfach bei der Herstellung des Gehäuses zu erzeugen, so dass keine weiteren Bauteile erforderlich sind. Die Austrittsöffnung wird somit unmittelbar von dem Material des Gehäuses begrenzt.

Prinzipiell kann genau eine Austrittsöffnung durch einen entsprechend dimensionierten Spalt ausgebildet sein. In einer alternativen Ausführungsform sind mehrere, insbesondere schlitzförmige Austrittsöffnungen vorgesehen, die gegebenenfalls durch Stege voneinander getrennt sind.

In einer Ausführungsform kann vorgesehen sein, dass die mindestens eine Austrittsöffnung an dem dem Ventilator abgewandten Ende des einen Strömungskanals angeordnet ist. In diesem Fall würde die von dem Ventilator beschleunigte Luft in dem Strömungskanal geradlinig auf die mindestens eine Austrittsöffnung gerichtet sein, wobei durch die Austrittsöffnung der Strömungsquerschnitt gegenüber dem Strömungskanal verringert ist.

In einer bevorzugten Ausführungsform ist jedoch für einen kompakten Aufbau der Reinigungsvorrichtung vorgesehen, dass der Strömungskanal mit einer gradlinigen oder gekrümmten Erstreckungsrichtung ausgebildet ist, wobei sich genau eine längliche Austrittsöffnung entlang der Erstreckungsrichtung erstreckt oder wobei mehrere Austrittsöffnungen entlang der Erstreckungsrichtung hintereinander angeordnet sind. Die aus der mindestens einen Austrittsöffnung austretende Luft weist somit eine Strömungsrichtung auf, die in etwa in einem rechten Winkel zu der Hauptströmungsrichtung (entsprechend der Erstreckungsrichtung des Strömungskanals) der Luft im Strömungskanal ausgerichtet ist.

Um die Geschwindigkeitsabnahme der von dem Ventilator beschleunigten Luft entlang des Strömungskanals zu kompensieren, wird vorgeschlagen, dass die Querschnittsfläche des Strömungskanals entlang seiner Erstreckungsrichtung von einem dem Ventilator zugeordneten Einlass abnimmt. So hat am Ende des Strömungskanals aus der mindestens einen Austrittsöffnung austretende Luft ähnliche Strömungsparameter wie am Anfang des Strömungskanals aus der mindestens einen Austrittsöffnung austretende Luft.

Insbesondere wenn die zu reinigende Scheibe der Sensorvorrichtung plan ausgebildet ist, kann der Strömungskanal gradlinig ausgebildet sein, sodass die Reinigungsvorrichtung beispielsweise an einer Kante der planen Scheibe angeordnet werden kann, wobei die mindestens eine Austrittsöffnung so ausgerichtet ist, dass der erzeugte Luftstrom auf die plane Scheibe gerichtet ist.

Wenn die Sensorvorrichtung hingegen eine gekrümmte Scheibe, beispielsweise eine dom- beziehungsweise halbkugelförmige Scheibe aufweist, so ist der Strömungskanal und insbesondere auch das den Strömungskanal ausbildende Gehäuse (teil-)ringförmig ausgebildet, sodass die Reinigungsvorrichtung die gekrümmte Scheibe zumindest teilweise umgibt.

Die mindestens eine Austrittsöffnung kann insbesondere in Erstreckungsrichtung des Strömungskanals schlitzförmig ausgebildet sein, wobei die Länge einer Austrittsöffnung, insbesondere parallel zu der Erstreckungsrichtung des Strömungskanals wesentlich größer ist als ihre Höhe, insbesondere 3-mal, bevorzugt mindestens 5-mal oder sogar 10-mal so lang wie die Höhe.

Damit die durch den Ventilator beschleunigte Luft mit einem ausreichenden Volumenstrom ohne großen Druckverlust durch die Austrittsöffnungen hindurchtreten kann, weist jede Austrittsöffnung eine minimale Querschnittsfläche von mindestens 10mm², bevorzugt von mindestens 20mm², besonders bevorzugt von mindestens 50mm² auf.

In einer Ausführungsform kann vorgesehen sein, dass das Gehäuse beispielsweise mittels 3D-Druck einteilig ausgebildet ist. Es kann aber auch vorgesehen sein, dass das Gehäuse mehrteilig, insbesondere zweiteilig oder dreiteilig ausgebildet ist, sodass das Gehäuse auch durch Metall ausgebildet sein kann.

In diesem Zusammenhang kann vorgesehen sein, dass die mindestens eine Strömungsöffnung nur genau in einem Teil des Gehäuses ausgebildet ist. Alternativ kann die mindestens eine Strömungsöffnung zwischen zwei Teilen des Gehäuses ausgebildet sein.

Die eingangs genannte Aufgabe wird auch gelöst durch eine Sensorvorrichtung mit einer erfindungsgemäßen Reinigungsvorrichtung, wobei die Reinigungsvorrichtung zumindest mittelbar an einem Sensorgehäuse angebracht ist. Das Gehäuse der Reinigungsvorrichtung ist entsprechend zur Anbringung an eine Sensorvorrichtung eingerichtet und kann bevorzugt mittels Befestigungsmittel an dem Sensorgehäuse angebracht werden.

In dem an dem Sensorgehäuse angebrachten Zustand ist die mindestens eine Austrittsöffnung der Reinigungsvorrichtung so ausgerichtet, dass die durch die mindestens eine Austrittsöffnung austretende Luft auf eine dem Sensor abgewandte Außenfläche der den Sensor schützenden Scheibe auftrifft.

Insbesondere wenn die Sensorvorrichtung zur Anbringung an einem fahrerlosen Fahrzeug vorgesehen ist und einen Laserscanner als Sensor umfasst, ist das gegebenenfalls mehrteilige Sensorgehäuse zumindest teilweise quaderförmig ausgebildet. Eine zumindest abschnittsweise plane Seitenfläche des quaderförmigen Sensorgehäuseteils kann dabei zumindest teilweise als Scheibe ausgebildet sein. In einer besonders bevorzugten Ausführungsform sind in diesem Fall unterhalb der planen Fläche Sensoren zur Erkennung einer Verschmutzung der Scheibe angeordnet.

Insbesondere in diesem Fall kann zudem vorgesehen sein, dass eine (zusätzliche) Scheibe gekrümmt ausgebildet ist. Hierbei ist insbesondere vorgesehen, dass die Kuppe der halbkugelförmigen Scheibe dem Sensorgehäuse und insbesondere der zumindest teilweise eine plane Scheibe aufweisenden Seitenfläche des Sensorgehäuseteils zugewandt ist. Die die plane Scheibe zumindest abschnittsweise aufweisende Seitenfläche des quaderförmigen Sensorgehäuseteils kann hierbei von einem vorstehenden Ring umgeben sein.

In diesem Fall kann ferner vorgesehen sein, dass die Reinigungsvorrichtung an der dem Sensorgehäuse abgewandten Ende der halbkugelförmigen Scheibe angeordnet ist und dass die Sensorvorrichtung an dem Fahrzeug so angeordnet ist, dass die Scheibe oberhalb des Sensorgehäuses angeordnet ist.

Durch die erfindungsgemäße Verwendung eines Ventilators ist die durch die mindestens eine Austrittsöffnung austretende Luftströmung ausreichend, um die Scheibe(n) zu reinigen, wenn die halbkugelförmige Scheibe oberhalb des Sensorgehäuses angeordnet ist. Die von der Reinigungsvorrichtung bereitgestellte Luftströmung ist nämlich ausreichend, um auch die sich auf der Oberseite des Sensorgehäuses sammelnde Verschmutzung über den die Oberseite umgebenden Ring hinaus zu beseitigen.

Die Reinigungsvorrichtung solcher insbesondere an Fahrzeugen montierter Sensorvorrichtungen können einfach angesteuert werden. So kann beispielsweise vorgesehen sein, dass die Reinigungsvorrichtung bei jeder Inbetriebnahme des Fahrzeugs angeschaltet wird. Es ist auch möglich, die Reinigungsvorrichtung in fest vorgebbaren Intervallen zu betreiben. Zudem ist es möglich, die Reinigungsvorrichtung in bestimmten Bereichen der von dem Fahrzeug angefahrenen räumlichen Gebiete zu betreiben, also insbesondere in besonders mit Verschmutzungen belasteten Gebieten oder im Outdoorbereich. Es ist darüber hinaus möglich, die Vorrichtung zu betreiben, wenn eine Verschmutzung der Scheibe in an sich bekannter Weise durch einen Sensor festgestellt wird.

Die Erfindung sowie das technische Umfeld werden im Folgenden anhand der Figuren beispielhaft erläutert. Es zeigen schematisch
- Figur 1:: eine Querschnittsansicht durch eine Sensorvorrichtung mit einer Reinigungsvorrichtung,
- Figur 2:: eine weitere Querschnittsansicht durch die Sensorvorrichtung,
- Figur 3:: eine teilweise transparente Perspektivansicht der Reinigungsvorrichtung,
- Figur 4:: eine Aufsicht auf die Reinigungsvorrichtung
- Figur 5:: eine Seitenansicht der Reinigungsvorrichtung,
- Figur 6:: eine weitere Ausführungsform einer Sensorvorrichtung mit einer Reinigungsvorrichtung und
- Figur 7:: eine teilweise transparente Perspektivansicht der Reinigungsvorrichtung aus Figur 6.

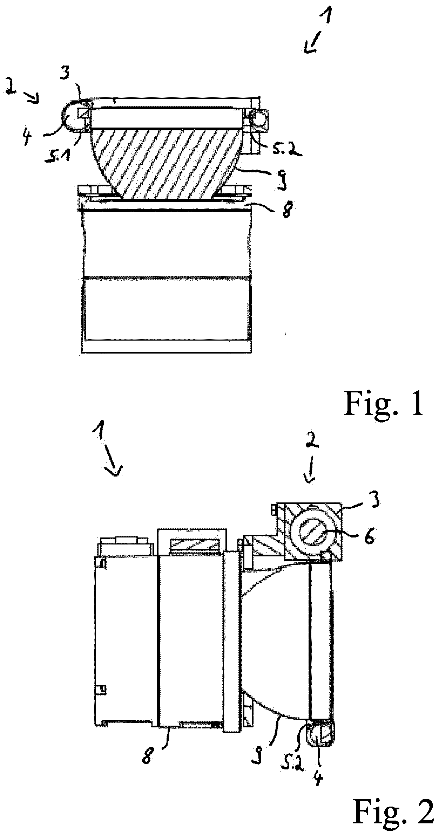

Die in den Figuren 1 und 2 dargestellte Sensorvorrichtung 1 umfasst ein Sensorgehäuse 8, in welchem ein Laserscanner als Sensor angeordnet ist. Die Sensorvorrichtung 1 umfasst zudem eine halbkugelförmig gekrümmte Scheibe 9, die im Bereich ihrer Kuppe an dem Sensorgehäuse 8 angebracht ist. Die der gekrümmten Scheibe 9 zugewandte Oberseite des Sensorgehäuses 8 kann abschnittsweise ebenfalls transparent bzw. als Scheibe ausgebildet sein, so dass Sensoren zur Erkennung einer Verschmutzung der Scheiben in dem Sensorgehäuse angeordnet sein können. Die Oberseite des Sensorgehäuses 8 ist von einem Ring 10 begrenzt.

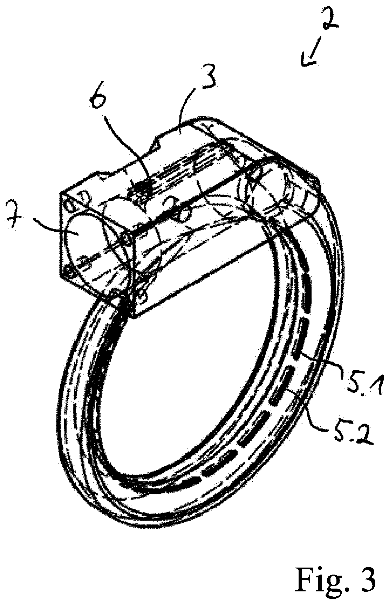

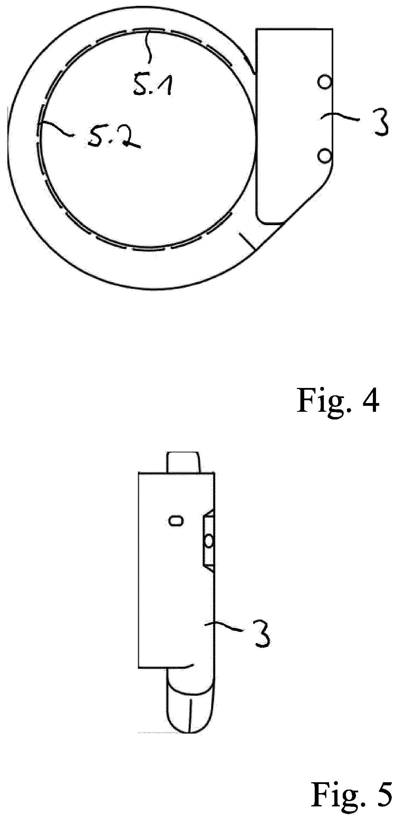

An einem in Figur 1 oberen Rand der Scheibe 9 ist eine Reinigungsvorrichtung 2 angebracht, die auch in den Figuren 3 bis 5 dargestellt ist.

Die Reinigungsvorrichtung 2 umfasst ein ringförmiges Gehäuse 3, welches in seinem Inneren einen Strömungskanal 4 ausbildet. Entlang des Strömungskanals 4 sind eine Vielzahl von schlitzförmigen Austrittsöffnungen 5.1 und 5.2 ausgebildet. Wie insbesondere aus der Figur 3 zu erkennen ist, nimmt die Querschnittsfläche des Strömungskanals 4 von seinem dem Ventilator 6 zugeordneten Einlass entlang seiner Erstreckungsrichtung ab.

Das Gehäuse 3 weist zudem eine Aufnahme für einen Ventilator 6 auf.

Wie insbesondere aus Figur 3 hervorgeht, ist zudem ein Filter 7 stromauf des Ventilators 6 in dem Gehäuse 3 angeordnet, sodass nur gefilterte Luft zum Ventilator 6 dringt.

Im Betrieb der Reinigungsvorrichtung 2 wird Luft durch den Filter 7 angesaugt und von dem Ventilator 6 in den Strömungskanal 4 beschleunigt, wobei die beschleunigte Luft aus dem Austrittsöffnungen 5.1 und 5.2 heraustritt.

Aufgrund der Abnahme des Querschnitts des Strömungskanals 4 tritt aus allen Austrittsöffnungen 5.1, 5.2 Luft mit etwa gleicher Strömungseigenschaft aus.

Die Austrittsöffnungen 5.1, 5.2 sind dabei so orientiert, dass durch die Austrittsöffnungen 5.1 und 5.2 austretende Luft auf die Scheibe 9 trifft (siehe beispielsweise Figur 1 und 2).

Aufgrund des Ventilators 6 und der Größe der Austrittsöffnungen 5.1, 5.2, 5.3 und 5.4 ist die Strömungsgeschwindigkeit der Luft ausreichend, nicht nur auf der Scheibe 9 befindlichen Schmutz, sondern auch auf einer nach oben orientierten Oberfläche des Sensorgehäuses 8 befindlichen Schmutz über den Ring 10 von der Sensorvorrichtung 1 zu entfernen.

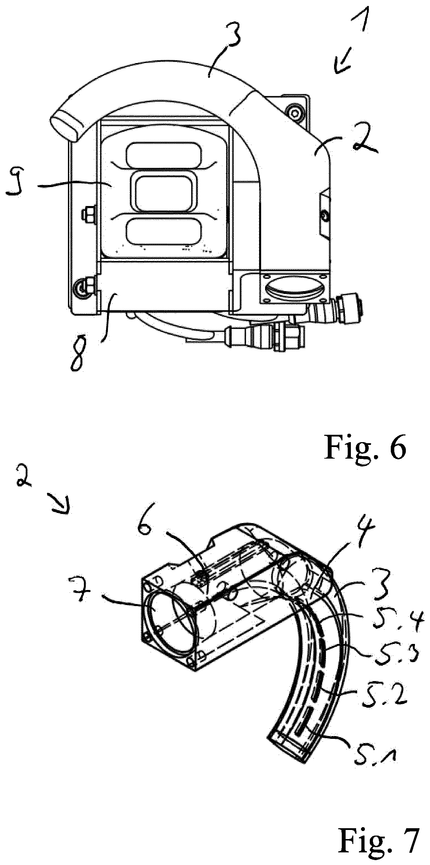

In Figur 6 ist eine weitere Ausführungsform einer Sensorvorrichtung 1 mit einer weiteren Reinigungsvorrichtung 2 dargestellt. In dem Sensorgehäuse 8 ist eine 3-D Kamera als Sensor angeordnet, welche durch eine plane Scheibe 9 geschützt ist. An dem Sensorgehäuse 8 ist eine Reinigungsvorrichtung 2 angebracht, die auch in Figur 7 dargestellt ist.

Die Reinigungsvorrichtung 2 umfasst ein Gehäuse 3, in welchem ein Ventilator 6 angeordnet ist. Das Gehäuse 3 bildet in seinem Inneren zudem einen Strömungskanal 4 auf, welcher sich etwa bogenförmigen von dem Ventilator 6 fort erstreckt und dessen Querschnitt in der Erstreckungsrichtung abnimmt. In dem Gehäuse 3 sind zur dem eine Vielzahl von Austrittsöffnungen 5.4, 5.3, 5.2 und 5.1 entlang der Erstreckungsrichtung des Strömungskanals 4 hintereinander angeordnet.

Im Betrieb saugt der Ventilator 6 Luft durch einen Filter 7 an und beschleunigt die Luft in den Strömungskanal 4, wobei die Luft durch die Austrittsöffnungen 5.4, 5.3, 5.2 und 5.1 austritt und auf die Scheibe 9 trifft, wo die Luft Verschmutzungen entfernt.

Da durch die Verwendung eines Ventilators 6 mit entsprechend hoher Drehzahl keine Druckluftquelle und kein Kompressor zur Auffüllung der Druckluftquelle benötigt wird, ist der apparative Aufwand für die Reinigungsvorrichtung 2 erheblich reduziert, wodurch sich Platz-, Gewicht- und Kostenvorteile ergeben.

### Bezugszeichenliste

- 1: Sensorvorrichtung
- 2: Reinigungsvorrichtung
- 3: Gehäuse
- 4: Strömungskanal
- 5.1, 5.2: Austrittsöffnung
- 6: Ventilator
- 7: Filter
- 8: Sensorgehäuse
- 9: Scheibe

## Patentansprüche

1. Reinigungsvorrichtung (2) für eine Sensorvorrichtung (1), umfassend
- ein Gehäuse (3) mit einem Strömungskanal (4),
- mindestens eine strömungstechnisch mit dem Strömungskanal (4) verbundene Austrittsöffnung (5.1, 5.2) und
- einen strömungstechnisch mit dem Strömungskanal (4) verbundenen Ventilator (6).

2. Reinigungsvorrichtung (2) nach Anspruch 1, wobei der Ventilator (6) in dem Gehäuse (3) angeordnet ist.

3. Reinigungsvorrichtung (2) nach Anspruch 1 oder 2, wobei die mindestens eine Austrittsöffnung (5.1, 5.2) als Aussparung in dem Gehäuse (3) ausgebildet ist.

4. Reinigungsvorrichtung (2) nach einem der vorhergehenden Ansprüche, wobei ein Querschnitt des Strömungskanals (4) entlang seiner Erstreckungsrichtung von einem dem Ventilator (6) zugeordneten Einlass abnimmt.

5. Reinigungsvorrichtung (2) nach einem der vorhergehenden Ansprüche, wobei der Strömungskanal (4) ringförmig ausgebildet ist.

6. Reinigungsvorrichtung (2) nach einem der Ansprüche 1 bis 4, wobei der Strömungskanal (4) geradlinig ausgebildet ist.

7. Reinigungsvorrichtung (2) nach einem der vorhergehenden Ansprüche, wobei ein Filter (7) stromauf des Ventilators (6) angeordnet ist.

8. Reinigungsvorrichtung (2) nach einem der vorhergehenden Ansprüche, wobei mehrere Austrittsöffnungen (5.1, 5.2) entlang der Erstreckungsrichtung des Strömungskanals (4) hintereinander angeordnet sind.

9. Reinigungsvorrichtung (2) nach einem der vorhergehenden Ansprüche, wobei die mindestens eine Austrittsöffnung (5.1, 5.2) schlitzförmig ausgebildet ist.

10. Reinigungsvorrichtung (2) nach einem der vorhergehenden Ansprüche, wobei eine minimale Querschnittsfläche einer Austrittsöffnung (5.1, 5.2) mindestens 10 mm² beträgt.

11. Reinigungsvorrichtung nach einem der vorhergehenden Ansprüche, wobei das Gehäuse (3) einteilig oder mehrteilig ausgebildet ist.

12. Sensorvorrichtung (1) mit einer Reinigungsvorrichtung (2) nach einem der vorhergehenden Ansprüche, umfassend ein Sensorgehäuse (8) und einen Sensor, wobei die Reinigungsvorrichtung (1) zumindest mittelbar an dem Sensorgehäuse (8) angebracht ist.

13. Sensorvorrichtung (1) nach Anspruch, wobei der Sensor ein Laserscanner, eine 3D-Kamera oder eine Kamera umfasst.

14. Sensorvorrichtung (1) nach Anspruch 12 oder 13, wobei an dem Sensorgehäuse eine Scheibe (9) angebracht ist, durch welche Strahlung zu oder von dem Sensor tritt, wobei die mindestens eine Austrittsöffnung (5.1, 5.2) der Reinigungsvorrichtung (2) auf eine dem Sensor abgewandte Außenfläche der Scheibe (9) gerichtet ist.

15. Sensorvorrichtung (1) nach einem der Ansprüche 12 bis 14, wobei die Scheibe (9) plan oder gekrümmt, bevorzugt gekrümmt und rotationssymmetrisch, ausgebildet ist.

16. Fahrerloses Fahrzeug mit mindestens einer Sensorvorrichtung (1) nach einem der Ansprüche 12 bis 15, wobei die Sensorvorrichtung (1) insbesondere so angeordnet ist, dass die Scheibe (9) oberhalb des Sensorgehäuses (8) angeordnet ist.

## Geänderte Patentansprüche

### Geänderte Patentansprüche gemäss Regel 137(2) EPÜ.

1. Reinigungsvorrichtung (2) für eine Sensorvorrichtung (1), umfassend
- ein Gehäuse (3) mit einem Strömungskanal (4),
- mindestens eine strömungstechnisch mit dem Strömungskanal (4) verbundene Austrittsöffnung (5.1, 5.2) und
- einen strömungstechnisch mit dem Strömungskanal (4) verbundenen Ventilator (6),
**dadurch gekennzeichnet, dass**
mehrere Austrittsöffnungen (5.1, 5.2) entlang der Erstreckungsrichtung des Strömungskanals (4) hintereinander angeordnet sind.

2. Reinigungsvorrichtung (2) nach Anspruch 1, wobei der Ventilator (6) in dem Gehäuse (3) angeordnet ist.

3. Reinigungsvorrichtung (2) nach Anspruch 1 oder 2, wobei die mindestens eine Austrittsöffnung (5.1, 5.2) als Aussparung in dem Gehäuse (3) ausgebildet ist.

4. Reinigungsvorrichtung (2) nach einem der vorhergehenden Ansprüche, wobei ein Querschnitt des Strömungskanals (4) entlang seiner Erstreckungsrichtung von einem dem Ventilator (6) zugeordneten Einlass abnimmt.

5. Reinigungsvorrichtung (2) nach einem der vorhergehenden Ansprüche, wobei der Strömungskanal (4) ringförmig ausgebildet ist.

6. Reinigungsvorrichtung (2) nach einem der Ansprüche 1 bis 4, wobei der Strömungskanal (4) geradlinig ausgebildet ist.

7. Reinigungsvorrichtung (2) nach einem der vorhergehenden Ansprüche, wobei ein Filter (7) stromauf des Ventilators (6) angeordnet ist.

8. Reinigungsvorrichtung (2) nach einem der vorhergehenden Ansprüche, wobei die mindestens eine Austrittsöffnung (5.1, 5.2) schlitzförmig ausgebildet ist.

9. Reinigungsvorrichtung (2) nach einem der vorhergehenden Ansprüche, wobei eine minimale Querschnittsfläche einer Austrittsöffnung (5.1, 5.2) mindestens 10 mm² beträgt.

10. Reinigungsvorrichtung nach einem der vorhergehenden Ansprüche, wobei das Gehäuse (3) einteilig oder mehrteilig ausgebildet ist.

11. Sensorvorrichtung (1) mit einer Reinigungsvorrichtung (2) nach einem der vorhergehenden Ansprüche, umfassend ein Sensorgehäuse (8) und einen Sensor, wobei die Reinigungsvorrichtung (1) zumindest mittelbar an dem Sensorgehäuse (8) angebracht ist.

12. Sensorvorrichtung (1) nach Anspruch 11, wobei der Sensor ein Laserscanner, eine 3D-Kamera oder eine Kamera umfasst.

13. Sensorvorrichtung (1) nach Anspruch 11 oder 12, wobei an dem Sensorgehäuse eine Scheibe (9) angebracht ist, durch welche Strahlung zu oder von dem Sensor tritt, wobei die mindestens eine Austrittsöffnung (5.1, 5.2) der Reinigungsvorrichtung (2) auf eine dem Sensor abgewandte Außenfläche der Scheibe (9) gerichtet ist.

14. Sensorvorrichtung (1) nach einem der Ansprüche 11 bis 13, wobei die Scheibe (9) plan oder gekrümmt, bevorzugt gekrümmt und rotationssymmetrisch, ausgebildet ist.

15. Fahrerloses Fahrzeug mit mindestens einer Sensorvorrichtung (1) nach einem der Ansprüche 11 bis 14, wobei die Sensorvorrichtung (1) insbesondere so angeordnet ist, dass die Scheibe (9) oberhalb des Sensorgehäuses (8) angeordnet ist.
